# EUROPEAN PATENT APPLICATION

(11) **EP 2 645 802 A1**
(43) Date of publication of application: **02.10.2013**
(21) Application number: 11843645.0
(22) Date of filing: 25.11.2011
(51) Int. Cl.: H04W 76/02, H04W 48/08, H04W 48/16

(54) **COMMUNICATION TERMINAL DEVICE AND METHOD OF RECONNECTING WITH CELL**

(30) Priority: 25.11.2010 JP 2010262410
(71) Applicant: Panasonic Corporation, Osaka 571-8501 (JP)
(72) Inventor: SEKI, Yuta, Chuo-ku Osaka 540-6207 (JP)
(74) Representative: Grünecker, Kinkeldey, Stockmair & Schwanhäusser
(86) International application number: PCT/JP2011/006565
(87) International publication number: WO 2012/070248

(57) **Abstract**

A communication terminal device capable of increasing the success rate of reconnection while suppressing signal volume. A communication terminal (100) connects to and communicates with any cell from among a plurality of cells under the control of a base station. A neighboring cell information decoding unit (105) acquires neighboring cell information from a cell that is currently connected. A neighboring cell searching unit (106), when reconnection with a cell becomes necessary, initiates the search for a cell, while detecting from among the cells in the neighboring cell information the cell coinciding with a cell detected by the search as the cell to be reconnected. A reconnection request information generating unit (107) generates a reconnection request message for the cell to be reconnected, which is detected by the neighboring cell searching unit (106).

## Description

### Technical Field

The present invention relates to a communication terminal apparatus and a method of reestablishing connection to a cell, and more particularly relates to a communication terminal apparatus configured to reestablish connection to a cell and to a method of reestablishing connection to a cell particularly in a radio communication system.

### Background Art

In a radio communication system, the propagation environment between a communication terminal apparatus and a base station changes, momentarily. As compared with a wire communication system, a radio link in a radio communication system is unstable. Such an unstable radio link is sometimes disconnected due to deterioration of the propagation environment or the like.

Meanwhile, connection reestablishment techniques for promptly recovering a disconnected radio link have been developed. For example, connection reestablishment processing is defined in a Long Term Evolution (LTE)/System Architecture Evolution (SAE) system, which is under standardization by 3rd Generation Partnership Project (3GPP) Standardization body (see, e.g., Non-Patent Literature (hereinafter, abbreviated as "NPL") 1). The connection reestablishment processing can recover the connection of disconnected radio link using simpler processing than processing to retry the connection procedure.

In the radio communication system of NPL 1, a base station (eNode B) provides and serves a plurality of cells. Meanwhile, a communication terminal apparatus (UE) in the radio communication system of NPL 1 transmits a connection reestablishment request message for requesting connection reestablishment to an incidentally-detected cell to the base station at the occurrence of a trigger for connection reestablishment. Examples of the trigger for connection reestablishment herein include an out-of-synchronization state between a base station and a communication terminal apparatus, and a handover failure.

The base station that has received the connection reestablishment request message checks a terminal connection reestablishment ID included in the connection reestablishment request message received from the communication terminal apparatus. The terminal connection reestablishment ID includes a cell radio network temporary identifier (C-RNTI), a physical cell ID (PCI) and a short MAC-1, for example. When a trigger for connection reestablishment due to disconnection of a radio link occurs, the base station transmits a connection reestablishment message for allowing connection reestablishment if the cell in which the communication terminal apparatus had been performing communication until the disconnection and the cell for which the communication terminal apparatus is requesting connection reestablishment are served by the same base station. On the other hand, if the cell in which the communication terminal apparatus had been performing communication until the disconnection, and the cell for which the communication terminal apparatus requesting connection reestablishment are not served by the same base station, the base station transmits a connection reestablishment reject message for rejecting connection reestablishment, and does not allow connection reestablishment. In general, the radio link of a communication terminal apparatus located at a cell edge apart from the base station is more easily disconnected, and a trigger for connection reestablishment is likely to occur, accordingly.

When a trigger for connection reestablishment due to a handover failure occurs, the base station allows connection reestablishment when the handover source cell and the handover target cell are served by the same base station, and the base station rejects connection reestablishment to a cell served by a different base station.

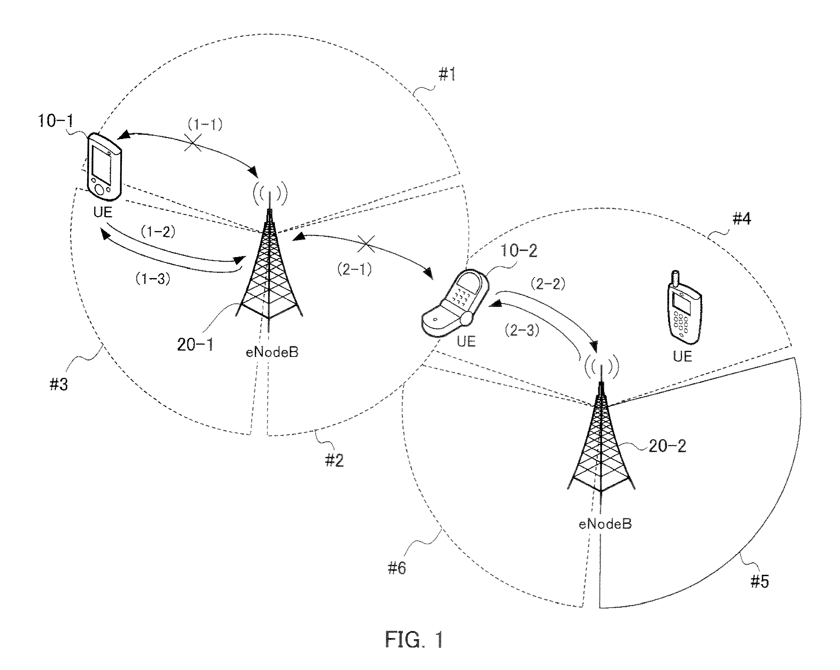

Next, a description will be provided, with reference to FIG. 1, regarding connection reestablishment processing when disconnection of a radio link is detected as a trigger for connection reestablishment in the radio communication system illustrated in NPL 1. FIG. 1 is a diagram illustrating connection reestablishment processing performed when disconnection of a radio link is detected as a trigger for connection reestablishment processing in the related art. In this case, the communication terminal apparatus can reestablish connection only to a cell served by the same base station. In FIG. 1, base station 20-1 provides and serves cells #1 to #3 and base station 20-2 provides and serves cells #4 to #6.

First, a case where connection reestablishment processing succeeds will be described with reference to FIG. 1.

In FIG. 1, communication terminal apparatus 10-1 detects disconnection of a radio link with base station 20-1 (1-1) and transmits a connection reestablishment request message for requesting connection reestablishment to cell #3 to base station 20-1 (1-2).

Next, base station 20-1 transmits a connection reestablishment message for allowing connection reestablishment to communication terminal apparatus 10-1 (1-3) since cell #1 to which communication terminal apparatus 10-1 had been connected until disconnection and cell #3 to which communication terminal apparatus 10-1 has made the request for connection reestablishment are both served by base station 20-1.

Accordingly, communication terminal apparatus 10-1 reestablishes connection to cell #3 and resumes communication.

Next, a case where connection reestablishment processing fails will be described with reference to FIG. 1.

In FIG. 1, communication terminal apparatus 10-2 detects disconnection of a radio link to base station 20-1 in cell #2 (2-1) and performs a cell search.

In addition, communication terminal apparatus 10-2 transmits a connection reestablishment request message for requesting connection reestablishment to base station 20-2, which provides and serves cell #4 found by the cell search (2-2).

Base station 20-2, however, transmits a connection reestablishment reject message for rejecting connection reestablishment to base station 20-2 (2-3) since cell #2 to which communication terminal apparatus 10-2 had been connected until disconnection and cell #4 to which communication terminal apparatus 10-2 has made the request for connection reestablishment are served by different base stations.

Accordingly, communication terminal apparatus 10-2 cannot reconnect to cell #4.

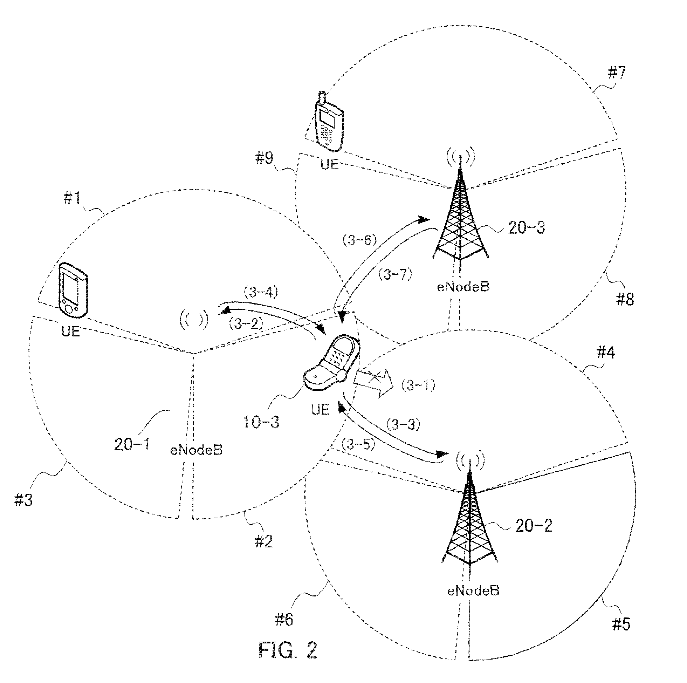

Next, a description will be provided, with reference to FIG. 2, regarding connection reestablishment processing used when a trigger for connection reestablishment due to a handover failure occurs in the radio communication system illustrated in NPL 1. FIG. 2 is a diagram illustrating connection reestablishment processing in the related art used when a trigger for connection reestablishment due to a handover failure occurs. In FIG. 2, a communication terminal apparatus can reestablish connection only to a cell served by the base station serving the handover source cell and to a cell served by the base station serving the handover target cell. In FIG. 2, base station 20-1 serves cells #1 to #3, base station 20-2 serves cells #4 to #6, and base station 20-3 serves cells #7 to #9.

First, a case where connection reestablishment processing succeeds will be described with reference to FIG. 2.

In FIG. 2, when failing in handover from base station 20-1 to base station 20-2 (3-1), communication terminal apparatus 10-3 transmits a connection reestablishment request message for requesting connection reestablishment to cell #2 served by base station 20-1, which is the handover source (3-2). Alternatively, when failing in handover from base station 20-1 to base station 20-2 (3-1), communication terminal apparatus 10-3 transmits a connection reestablishment request message for requesting connection reestablishment to cell #4 served by base station 20-2, which is the handover target (3-3).

Next, base station 20-1, which is the handover source, or base station 20-2, which is the handover target, transmits a connection reestablishment message for allowing connection reestablishment to communication terminal apparatus 10-3 (3-4 or 3-5).

Accordingly, communication terminal apparatus 10-3 reestablishes connection to cell #2 or #4 and resumes communication.

Next, a case where connection reestablishment processing fails will be described with reference to FIG. 2.

In FIG. 2, when failing in handover from base station 20-1 to base station 20-2 (3-1), communication terminal apparatus 10-3 performs a cell search.

In addition, communication terminal apparatus 10-3 transmits a connection reestablishment request message for requesting connection reestablishment to cell #9 found by cell search (3-6).

However, base station 20-3 transmits a connection reestablishment reject message for rejecting connection reestablishment to communication terminal apparatus 10-3 (3-7) since cell #9 is not served by the handover source base station or handover target base station.

Accordingly, base station 10-3 cannot reconnect to cell #9.

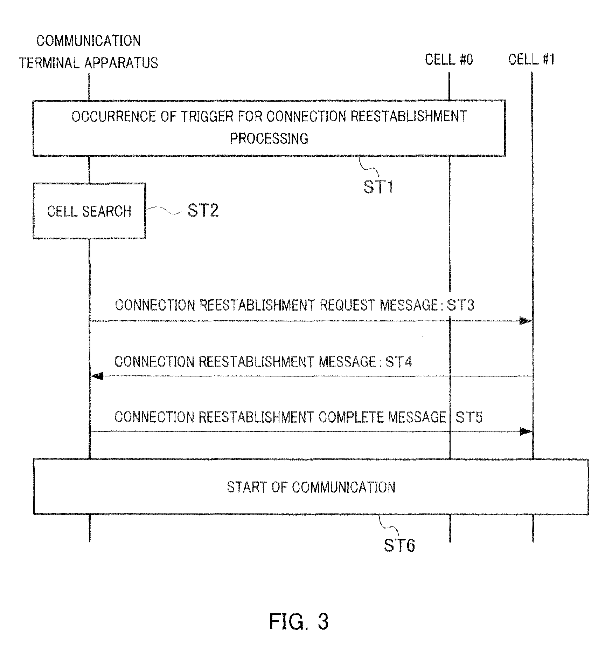

Next, a description will be provided in more detail with reference to FIG. 3 regarding connection reestablishment processing when connection reestablishment in the related art succeeds. FIG. 3 is a sequence diagram illustrating connection reestablishment processing when the connection reestablishment in the related art succeeds.

In FIG. 3, when a trigger for connection reestablishment processing occurs (step ST1), a communication terminal apparatus performs a cell search (step ST2) and detects a predetermined cell.

In addition, the communication terminal apparatus transmits a connection reestablishment request message to a base station serving cell #1 in order to reestablish connection to cell #1 detected by cell search (step ST3).

Next, the communication terminal apparatus receives a connection reestablishment message from the base station (step ST4) and then completes the connection reestablishment by transmitting a connection reestablishment complete message (step ST5). Thus, the communication terminal apparatus can reconnect with cell #1 and starts communication (step ST6).

In FIG. 3, cell #0 and cell #1 are served by the same base station, or the base station serving cell #0 is the handover source base station, and the base station serving cell #1 is the handover source base station.

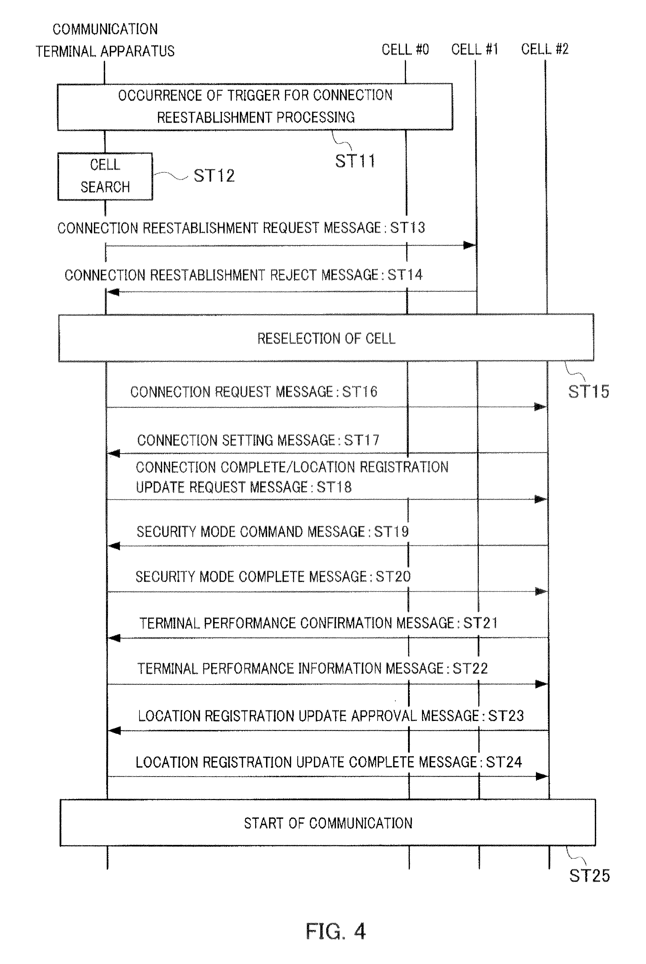

Next, a description will be provided in more detail with reference to FIG. 4 regarding processing when connection reestablishment in the related art fails. FIG. 4 is a sequence diagram illustrating processing when the connection reestablishment in the related art fails.

In FIG. 4, when a trigger for connection reestablishment processing occurs (step ST11), a communication terminal apparatus performs a cell search (step ST12) and detects a cell.

In addition, the communication terminal apparatus transmits a connection reestablishment request message to a base station serving cell #1 in order to reestablish connection to cell #1 detected by cell search (step ST13).

Next, the communication terminal apparatus receives a connection reestablishment reject message (step ST14).

The communication terminal apparatus performs cell re-selection processing in order to resume communication (step ST15).

The communication terminal apparatus transmits a connection establishment request message (step ST16) and receives a connection setting message (step ST17).

The communication terminal apparatus transmits a connection establishment complete/location registration update request message (step ST18) and receives a security mode command message (step ST19).

Next, the communication terminal apparatus transmits a security mode complete message (step ST20) and receives a terminal performance confirmation message (step ST21).

The communication terminal apparatus transmits a terminal performance information message (step ST22) and receives a location registration approval message (step ST23).

Next, the communication terminal apparatus transmits a location registration update complete message (step ST24).

Accordingly, the communication terminal apparatus can reconnect to cell #2 and starts communication (step ST25).

In FIG. 4, cell #0 and cell #1 are served by different base stations, or cell #1 is not served by the handover source base station or handover target base station either.

As described above, when a connection reestablishment request is rejected, the communication terminal apparatus needs to perform the location registration and connection establishment procedure again. In addition, when not being able to detect a connection reestablishment candidate cell in a predetermined period of time during cell search processing, the communication terminal apparatus needs to perform the connection establishment procedure again as a connection reestablishment failure.

### Citation List

### Non-Patent Literature

NPL1
   3GPP TS 36.331 V8.8.0 (2009-12)

### Summary of Invention

### Technical Problem

In the related art system, however, since a communication terminal apparatus cannot identify a cell allowing connection reestablishment, the communication terminal apparatus attempts to reestablish connection to an incidentally-detected cell. Accordingly, a communication terminal apparatus located at a cell edge is likely to detect a plurality of different cells and also a cell other than a cell allowing connection reestablishment, compared with a communication terminal apparatus located near the center of the cell. In the related art system, there arises a problem in that unnecessary signaling used for a connection reestablishment request message and a connection reestablishment reject message increases, resulting in an increase in the amount of signaling in this case. Moreover, another problem in the related art system is that performing the connection establishment processing after connection reestablishment is rejected results in an increase in the amount of signaling compared to resuming communication after connection reestablishment succeeds.

It is an object of the present invention to provide a communication terminal apparatus and a method of reestablishing connection to a cell each of which can increase the success rate in connection reestablishment and also limit an increase in the amount of signaling.

### Solution to Problem

A communication terminal apparatus according to an aspect of the present invention is a communication terminal apparatus that connects to any of a plurality of cells served by a base station, to perform communication, the apparatus including: an acquiring section that acquires, from a cell to which the apparatus is currently connected, neighboring cell information indicating a neighboring cell located near the currently connected cell; a detection section that performs a cell search when a need for connection reestablishment to a cell arises, and that detects, as a connection reestablishment target cell, a cell that matches a cell detected by the search from among cells indicated by the neighboring cell information; and a connection reestablishment section that re-establishes connection to the connection reestablishment target cell detected by the detection section.

A method of reestablishing connection to a cell according to an aspect of the present invention is a method for a communication terminal apparatus that connects to any of a plurality of cells served by a base station, to perform communication, the method including: acquiring, from a cell to which the apparatus is currently connected, neighboring cell information indicating a neighboring cell located near the currently connected cell; performing a cell search when a need for connection reestablishment to a cell arises, and detecting, as a connection reestablishment target cell, a cell that matches a cell detected by the search from among cells indicated by the neighboring cell information; and reestablishing connection to the detected connection reestablishment target cell.

### Advantageous Effects of Invention

According to the present invention, it is possible to increase the success rate in connection reestablishment and also to limit an increase in the amount of signaling.

### Brief Description of Drawings

FIG. 1 is a diagram illustrating connection reestablishment processing in the related art when disconnection of a radio link is detected as a trigger for the connection reestablishment processing;
FIG. 2 is a diagram illustrating connection reestablishment processing in the related art when a handover failure occurs and triggers the connection reestablishment processing;
FIG. 3 is a sequence diagram illustrating an example of the connection reestablishment processing in the related art when connection reestablishment succeeds;
FIG. 4 is a sequence diagram illustrating processing in the related art when connection reestablishment fails;
FIG. 5 is a block diagram illustrating a configuration of a communication terminal apparatus according to Embodiment 1 of the present invention;
FIG. 6 is a flowchart illustrating operation of the communication terminal apparatus according to Embodiment 1 of the present invention;
FIG. 7 is a sequence diagram illustrating operation of a radio communication system according to Embodiment 1 of the present invention;
FIG. 8 is a block diagram illustrating a configuration of a base station according to Embodiment 2 of the present invention;
FIG. 9 is a block diagram illustrating a configuration of a base station according to Embodiment 3 of the present invention; and
FIG. 10 is a flowchart illustrating operation of the communication terminal apparatus when lowering the priority for a cell other than a cell indicated by neighboring cell information, as a variation of Embodiments 1 to 3.

### Description of Embodiments

Hereinafter, embodiments of the present invention will be described in detail with reference to the accompanying drawings.

### (Embodiment 1)

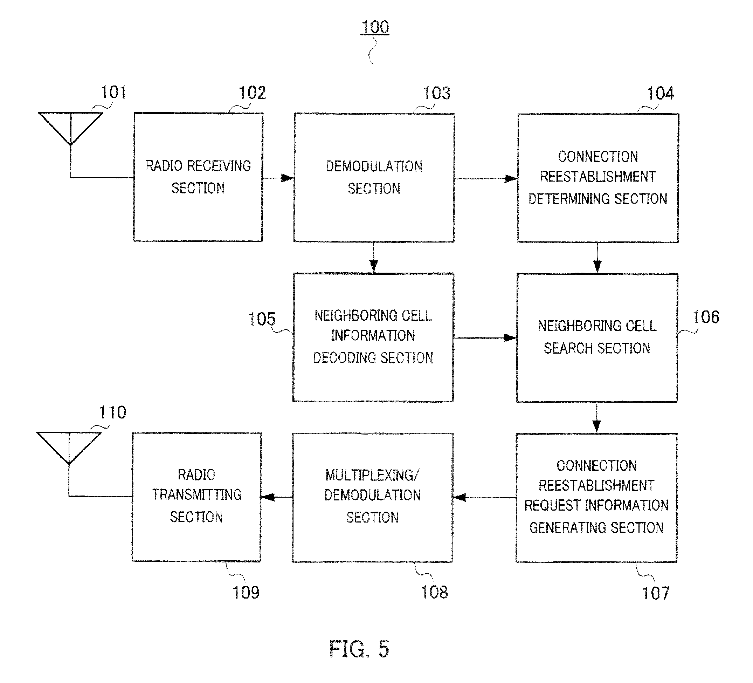

FIG. 5 is a block diagram illustrating a configuration of communication terminal apparatus 100 according to Embodiment 1 of the present invention.

Communication terminal apparatus 100 mainly includes antenna 101, radio receiving section 102, demodulation section 103, connection reestablishment determining section 104, neighboring cell information decoding section 105, neighboring cell search section 106, connection reestablishment request information generating section 107, multiplexing/demodulation section 108, radio transmitting section 109, and antenna 110.

Antenna 101 receives a signal and also outputs the received signal to radio receiving section 102.

Radio receiving section 102 converts the signal received as input from antenna 101 from a radio signal to a baseband signal and outputs the baseband signal to demodulation section 103.

Demodulation section 103 demodulates the baseband signal received as input from radio receiving section 102 to acquire predetermined information and outputs the acquired information to connection reestablishment determining section 104 and neighboring cell information decoding section 105. Specifically, demodulation section 103 acquires synchronization information, security information, reconfiguration information or handover information through demodulation and outputs the acquired information to connection reestablishment determining section 104. In addition, demodulation section 103 acquires neighboring cell information through demodulation and outputs the acquired neighboring cell information to neighboring cell information decoding section 105. The neighboring cell information is transmitted from a base station via a currently connected cell using a broadcast information message (System Information), a connection setting message (RRC Connection Setup), or a connection reconfiguration message (RRC Connection Reconfiguration).

Connection reestablishment determining section 104 determines whether or not to perform connection reestablishment on the basis of the synchronization information, security information, reconfiguration information or handover information received as input from demodulation section 103. Specifically, connection reestablishment determining section 104 determines to perform connection reestablishment when detecting information that triggers connection reestablishment from the synchronization information, security information, reconfiguration information or handover information received as input from demodulation section 103. Connection reestablishment determining section 104 determines to perform connection reestablishment when detecting disconnection of a radio link (radio link failure) from the synchronization information, for example. Connection reestablishment determining section 104 determines to perform connection reestablishment when detecting an integrity check failure from the security information. Connection reestablishment determining section 104 determines to perform connection reestablishment when detecting an RRC connection reconfiguration failure from the reconfiguration information. Moreover, connection reestablishment determining section 104 determines to perform connection reestablishment when detecting a handover failure from the handover information. When determining to perform connection reestablishment, connection reestablishment determining section 104 outputs a neighboring cell search instruction that indicates a neighboring cell search to neighboring cell search section 106.

Neighboring cell information decoding section 105 decodes neighboring cell information received as input from demodulation section 103. Moreover, neighboring cell information decoding section 105 outputs the decoded neighboring cell information to neighboring cell search section 106. The neighboring cell information to be decoded by neighboring cell information decoding section 105 herein is information on another cell served by the base station that serves a cell to which communication terminal apparatus 100 had been connected until disconnection of the radio link. Alternatively, the neighboring cell information to be decoded herein is information on another cell served by the base station that also serves a cell to which communication terminal apparatus 100 is connected, and a cell served by a base station located near the base station. More specifically, the neighboring cell information in this case is the information on cells served by a handover source base station and a handover target base station, respectively. In addition, the neighboring cell information is cell ID information on the neighboring cell (e.g., PCI of neighboring cell), information on a frequency used in the neighboring cell (e.g., frequency list of neighboring cell), or information on a radio connection system (Radio Access Technology (RAT)) used by the neighboring cell. The radio access technology is information indicating a connection system used in radio communication systems, such as GSM, UTRAN or E-UTRAN.

Upon receipt of a neighboring cell search instruction from connection reestablishment determining section 104, neighboring cell search section 106 performs a neighboring cell search and detects a cell allowing connection reestablishment, on the basis of the search result and decoded neighboring cell information received as input from neighboring cell information decoding section 105. Neighboring cell search section 106 performs, as a neighboring cell search, processing to determine whether or not the cell detected by cell search matches a cell indicated by the cell ID information received as input from neighboring cell information decoding section 105. In addition, neighboring cell search section 106 performs, as a neighboring cell search, processing to determine whether or not the frequency information used in the cell detected by cell search matches the frequency information received as input from neighboring cell information decoding section 105. Moreover, neighboring cell search section 106 performs, as a neighboring cell search, processing to determine whether or not the radio connection system information used in the cell detected by cell search matches the radio connection system information received as input from neighboring cell information decoding section 105.

When detecting a cell allowing connection reestablishment, neighboring cell search section 106 outputs information on the cell allowing connection reestablishment to reestablishment request information generating section 107. Neighboring cell search section 106 detects, as a cell allowing connection reestablishment, a cell that matches the cell detected by cell search, from among cells indicated by the cell ID information received as input from neighboring cell information decoding section 105, for example. Alternatively, neighboring cell search section 106 detects, as a cell allowing connection reestablishment, a cell that matches the cell detected by cell search, from among cells using the frequency information received as input from neighboring cell information decoding section 105. Alternatively, neighboring cell search section 106 detects, as a cell allowing connection reestablishment, a cell that matches the cell detected by cell search, from among cells using the radio connection system information received as input from neighboring cell information decoding section 105.

Upon receipt of information on a cell allowing connection reestablishment from neighboring cell search section 106, connection reestablishment request information generating section 107 generates a connection reestablishment request message intended for the cell allowing connection reestablishment, with reference to the information on this particular cell and outputs the connection reestablishment request message to multiplexing/modulation section 108. Meanwhile, connection reestablishment request information generating section 107 generates no connection reestablishment request message when not receiving information on a cell allowing connection reestablishment from neighboring cell search section 106. Accordingly, communication terminal apparatus 100 attempts connection reestablishment to a cell allowing connection reestablishment. The PCI of the cell in which Communication terminal apparatus 100 has been communicating is included in this connection reestablishment request message.

Multiplexing/modulation section 108 multiplexes the connection reestablishment request message received as input from connection reestablishment request information generating section 107 with other information to generate multiplexed data. Multiplexing/modulation section 108 modulates the generated multiplexed data to generate a modulation signal and outputs the modulation signal to radio transmitting section 109.

Radio transmitting section 109 converts the modulation signal received as input from multiplexing/modulation section 108 from a baseband signal to a radio signal and outputs the radio signal to antenna 110.

Antenna 110 transmits the signal received as input from radio transmitting section 109.

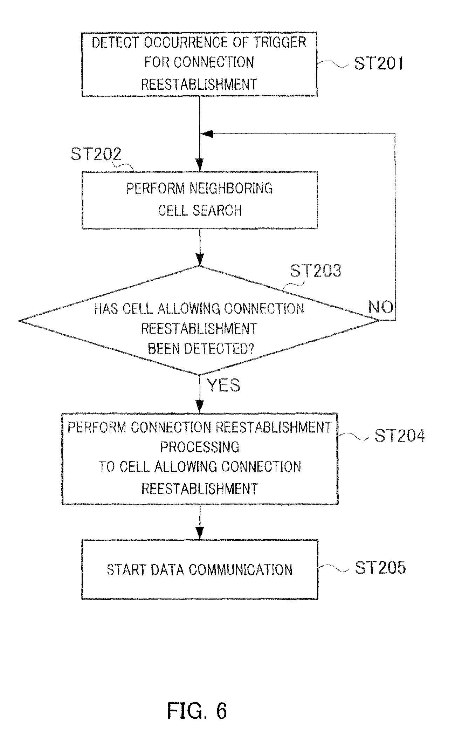

Next, a description will be provided regarding operation of communication terminal apparatus 100 with reference to FIG. 6. FIG. 6 is a flowchart illustrating the operation of communication terminal apparatus 100.

First, connection reestablishment determining section 104 detects the occurrence of a trigger for connection reestablishment (step ST201).

Next, neighboring cell search section 106 performs a neighboring cell search (step ST202).

Next, neighboring cell search section 106 determines whether or not a cell allowing connection reestablishment has been detected (step ST203).

When no cell allowing connection reestablishment has been detected (NO: step ST203), the processing of communication terminal apparatus 100 is returned to step ST202.

Meanwhile, when detecting a cell allowing connection reestablishment (Yes: step ST203), connection reestablishment request information generating section 107 generates a connection reestablishment request message and starts connection reestablishment processing with respect to the cell allowing connection reestablishment (step ST204).

Next, communication terminal apparatus 100 starts data communication with the connection reestablishment target cell (step ST205).

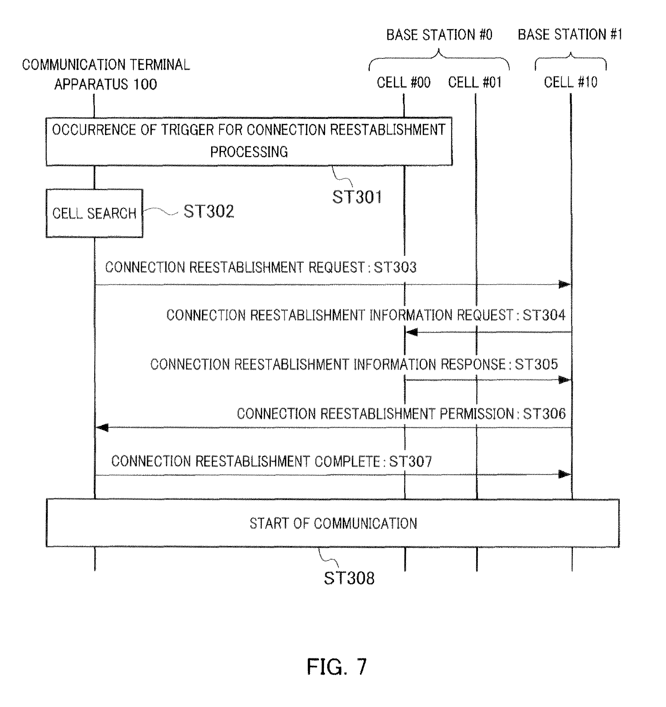

Next, a description will be provided regarding operation of a radio communication system including communication terminal apparatus 100 in Embodiment 1 with reference to FIG. 7. FIG. 7 is a sequence diagram illustrating the operation of the radio communication system in Embodiment 1. In FIG. 7, cells #00 and #01 are served by base station #0, while cell #10 is served by base station #1.

Referring to FIG. 7, when a trigger for connection reestablishment processing occurs while communication terminal apparatus 100 is connected to cell #00 (step ST301), communication terminal apparatus 100 performs a neighboring cell search (step ST302) and detects cell #10 allowing connection reestablishment.

Communication terminal apparatus 100 transmits a connection reestablishment request message to detected cell #10 (step ST303).

Next, cell #10 transmits a connection reestablishment information request message to cell #00 to acquire connection reestablishment information required for reestablishing connection to communication terminal apparatus 100 (step ST304).

Next, cell #00 transmits the connection reestablishment information to cell #10 as a connection reestablishment information response message (step ST305).

Next, cell #10 transmits a connection reestablishment message to communication terminal apparatus 100 (step ST306).

Next, communication terminal apparatus 100 completes connection reestablishment by transmitting a connection reestablishment complete message to cell #10 (step ST307).

Accordingly, communication terminal apparatus 100 re-establishes connection to connection reestablishment target cell #10 and starts communication (step ST308). As described above, communication terminal apparatus 100 detects cell #10 which allows connection reestablishment, using the neighboring cell information acquired in step ST302 and thus can surely reconnect to detected cell #10.

Incidentally, handover and re-direction may be used as the processing to move a communication terminal apparatus to a different cell before the occurrence of a trigger for connection reestablishment. However, when a downlink message does not arrive at the communication terminal apparatus because the communication terminal apparatus is at a cell edge, or when a large number of communication terminal apparatuses simultaneously move by train or the like, the command for executing the abovementioned processing may not arrive at an appropriate timing. In such cases, it is effective to perform the connection reestablishment processing of Embodiment 1.

As described above, according to Embodiment 1, an increase in the amount of signaling can be limited since a connection reestablishment request is made to a cell which allows connection reestablishment and which has been detected using neighboring cell information.

Moreover, according to Embodiment 1, since a connection reestablishment request is made to the cell which allows connection reestablishment and which has been detected using neighboring cell information, the success rate for connection reestablishment can be increased, which in turn makes it possible to limit an increase in unnecessary traffic.

In Embodiment 1, the connection reestablishment information required for connection reestablishment to a communication terminal apparatus is directly received or transmitted between base stations, but the present invention is not limited to this case, and such connection reestablishment information may be transmitted and received between base stations via a mobile management entity (MME).

### (Embodiment 2)

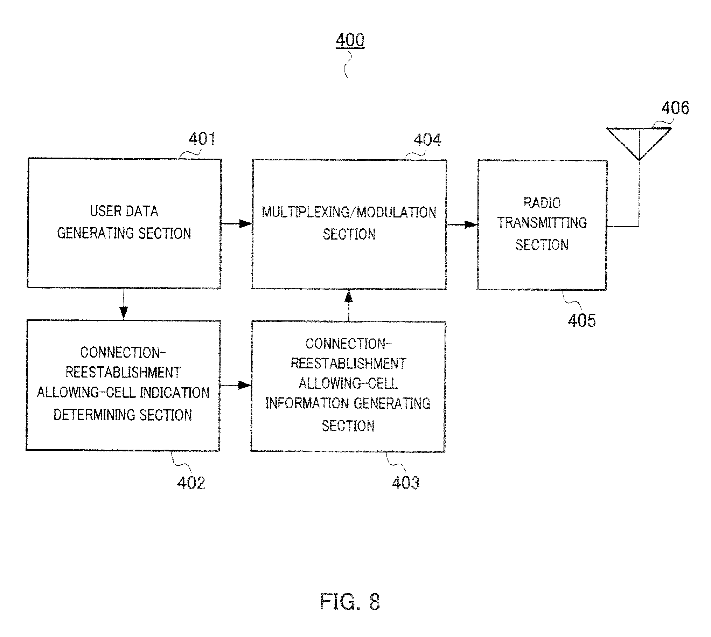

FIG. 8 is a block diagram illustrating a configuration of base station 400 according to Embodiment 2 of the present invention. The configuration of a communication terminal apparatus in Embodiment 2 is the same as the configuration illustrated in FIG. 5. Accordingly, any duplicate description of the configuration will be omitted in Embodiment 2.

Base station 400 mainly includes user data generating section 401, connection-reestablishment allowing-cell indication determining section 402, connection-reestablishment allowing-cell information generating section 403, multiplexing/modulation section 404, radio transmitting section 405, and antenna 406.

User data generating section 401 generates user data to be transmitted to communication terminal apparatus 100 and outputs the generated user data a to multiplexing/modulation section 404. In addition, user data generating section 401 outputs the size of data generated user data for each communication terminal apparatus 100 to connection-reestablishment allowing-cell indication determining section 402.

Connection-reestablishment allowing-cell indication determining section 402 selects communication terminal apparatus 100 to which a cell allowing connection reestablishment is indicated as neighboring cell information, on the basis of the sizes of data of respective communication terminal apparatuses 100 received as input from user data generating section 401. Connection-reestablishment allowing-cell indication determining section 402 selects communication terminal apparatus 100 having the size of data not less than a threshold, for example. Connection-reestablishment allowing-cell indication determining section 402 instructs connection-reestablishment allowing-cell information generating section 403 to indicate neighboring cell information on a cell allowing connection reestablishment to selected communication terminal apparatus 100.

Connection-reestablishment allowing-cell information generating section 403 generates neighboring cell information on the cell allowing connection reestablishment, to be transmitted to communication terminal apparatus 100, according to the instruction from connection-reestablishment allowing-cell indication determining section 402, and outputs the neighboring cell information to multiplexing/modulation section 404.

Multiplexing/modulation section 404 multiplexes the user data received as input from user data generating section 401 with the information on the cell allowing connection reestablishment, received as input from connection-reestablishment allowing-cell information generating section 403, to generate multiplexed data. In addition, multiplexing/modulation section 404 modulates the generated multiplexed data to generate a modulation signal and outputs the generated modulation signal to radio transmitting section 405.

Radio transmitting section 405 converts the modulation signal received as input from multiplexing/modulation section 404 from a baseband signal to a radio signal and outputs the radio signal to antenna 406.

Antenna 406 transmits the signal received as input from radio transmitting section 405.

In Embodiment 2, the operation of communication terminal apparatus 100 is the same as the operation illustrated in FIG. 6, and the operation of the radio communication system is also the same as the operation illustrated in FIG. 7. Accordingly, a duplicate description of the operation is omitted herein.

As described above, in Embodiment 2, neighboring cell information is transmitted to a communication terminal apparatus involving a larger loss from a connection reestablishment failure, or a higher probability of occurrence of connection reestablishment. Thus, according to Embodiment 2, it is possible to obtain, in addition to the effect obtained in Embodiment 1, the effect of preventing a reduction in the downlink transmission efficiency and of reducing the amount of signaling since neighboring cell information is transmitted only to a communication terminal apparatus in need of neighboring cell information.

### (Embodiment 3)

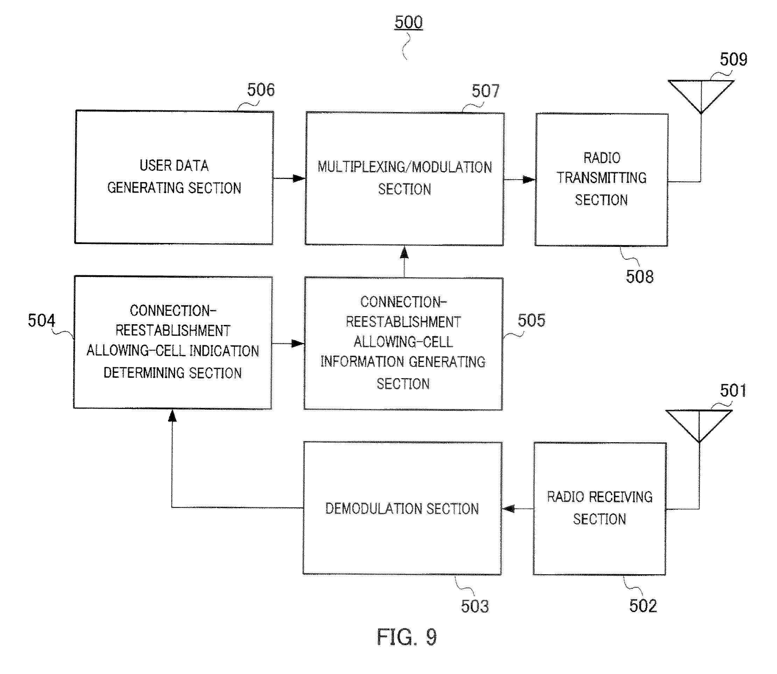

FIG. 9 is a block diagram illustrating a configuration of base station 500 according to Embodiment 3 of the present invention. The configuration of a communication terminal apparatus in Embodiment 3 is the same as the configuration illustrated in FIG. 5. Thus, any duplicate description of the configuration will be omitted in Embodiment 3.

Base station 500 mainly includes antenna 501, radio receiving section 502, demodulation section 503, connection-reestablishment allowing-cell indication determining section 504, connection-reestablishment allowing-cell information generating section 505, user data generating section 506, multiplexing/modulation section 507, radio transmitting section 508, and antenna 509.

Antenna 501 receives a signal and outputs the received signal to radio receiving section 502.

Radio receiving section 502 converts the signal received from antenna 501 from a radio signal to a baseband signal and outputs the baseband signal to demodulation section 503.

Demodulation section 503 demodulates the baseband signal received as input from radio receiving section 502 to acquire communication terminal apparatus information and outputs the acquired communication terminal apparatus information to connection-reestablishment allowing-cell indication determining section 504. Demodulation section 503 acquires the electric field strength of the received signal for each communication terminal apparatus 100 and outputs the received electric field strength acquired for each communication terminal apparatus 100 to connection-reestablishment allowing-cell indication determining section 504 as the communication terminal apparatus information. In addition, demodulation section 503 acquires a moving speed of each communication terminal apparatus 100 based on the received signal and outputs the acquired moving speed of each communication terminal apparatus 100 to connection-reestablishment allowing-cell indication determining section 504.

Connection-reestablishment allowing-cell indication determining section 504 selects communication terminal apparatus 100 to which a cell allowing connection reestablishment is to be indicated, on the basis of the communication terminal apparatus information received as input from demodulation section 503. Moreover, connection-reestablishment allowing-cell indication determining section 504 instructs connection-reestablishment allowing-cell information generating section 505 to indicate neighboring cell information on a cell allowing connection reestablishment to selected communication terminal apparatus 100. Connection-reestablishment allowing-cell indication determining section 504 instructs connection-reestablishment allowing-cell information generating section 505 to indicate neighboring cell information on a cell allowing connection reestablishment only to communication terminal apparatus 100 having an electric field strength not greater than a threshold, for example. In addition, connection-reestablishment allowing-cell indication determining section 504 instructs connection-reestablishment allowing-cell information generating section 505 to indicate neighboring cell information on a cell allowing connection reestablishment only to communication terminal apparatus 100 having a moving speed not less than a threshold

Connection-reestablishment allowing-cell information generating section 505 generates neighboring cell information on a cell allowing connection reestablishment to be transmitted to communication terminal apparatus 100, according to the instruction from connection-reestablishment allowing-cell indication determining section 504 and outputs the neighboring cell information to multiplexing/modulation section 507.

User data generating section 506 generates user data to be transmitted to communication terminal apparatus 100 and outputs the user data to multiplexing/modulation section 507.

Multiplexing/modulation section 507 multiplexes the user data received as input from user data generating section 506 with the neighboring cell information on a cell allowing connection reestablishment received as input from connection-reestablishment allowing-cell information generating section 505 to generate multiplexed data. In addition, multiplexing/modulation section 507 modulates the generated multiplexed data to generate a modulation signal and outputs the generated modulation signal to radio transmitting section 508.

Radio transmitting section 508 converts the modulation signal received as input from multiplexing/modulation section 507 from a baseband signal to a radio signal and outputs the radio signal to antenna 509.

Antenna 509 transmits a signal received from radio transmitting section 508.

The operation of communication terminal apparatus 100 in Embodiment 3 is the same as the operation illustrated in FIG. 6, and the operation of the radio communication system in Embodiment 3 is the same as the operation illustrated in FIG. 7. Thus, any duplicate description of the operation will be omitted herein.

As described above, in Embodiment 3, neighboring cell information can be transmitted to a communication terminal apparatus involving a larger loss from a connection reestablishment failure, or a higher probability of occurrence of connection reestablishment. Thus, according to Embodiment 3, it is possible to obtain, in addition to the effect obtained in Embodiment 1, the effect of preventing a reduction in the downlink transmission efficiency and of reducing the amount of signaling since neighboring cell information is transmitted only to a communication terminal apparatus in need of neighboring cell information.

It should be noted that, although the configuration in which a cell other than the cell indicated by neighboring cell information is not selected as a connection reestablishment target cell is employed in Embodiments 1 to 3, the present invention is not limited to this configuration, and it is possible to employ a configuration in which the priority for a cell other than the cell indicated by neighboring cell information is lowered during detection of a connection reestablishment target cell.

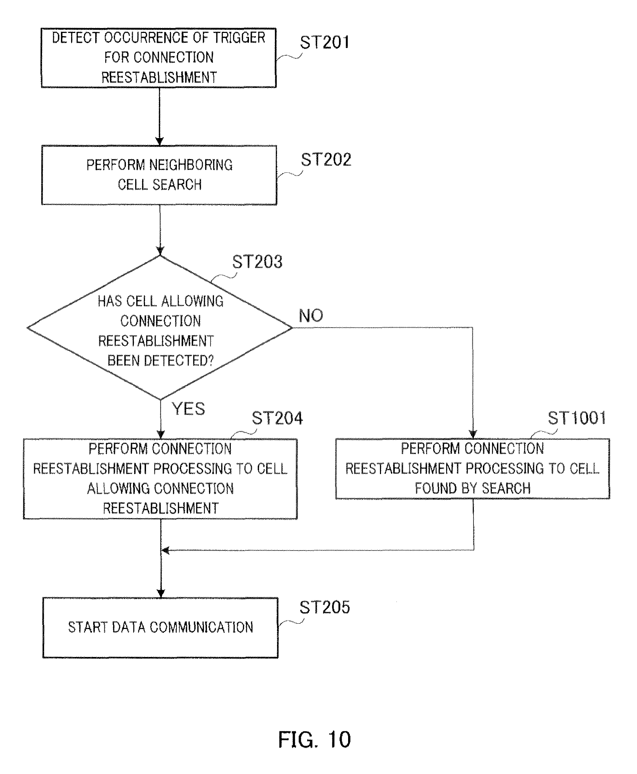

FIG. 10 is a flowchart illustrating, as a variation of Embodiments 1 to 3, the operation of a communication terminal apparatus when the priority for a cell other than the cell indicated by neighboring cell information is lowered. In FIG. 10, the same parts of the operation as those in FIG. 6 will be assigned the same reference numerals and any duplicate description thereof will be omitted.

Referring to FIG. 10, when detecting a cell allowing connection reestablishment in step ST203 (Yes in step ST203), connection reestablishment request information generating section 107 starts connection reestablishment processing with a cell allowing connection reestablishment, by generating a connection reestablishment request message (step ST204).

Meanwhile, when no cell allowing connection reestablishment has been detected in step ST203 (No in step ST203), communication terminal apparatus 100 starts connection reestablishment processing with the cell found by neighboring cell search in step ST202 (step ST1001).

Communication terminal apparatus 100 starts data communication with the connection reestablishment target cell after the connection reestablishment processing in step ST204 or the connection reestablishment processing in step ST1001 (step ST205).

According to the operation in FIG. 10, it is possible to prevent processing load required for connection reestablishment from being generated and also delay in connection reestablishment due to repetition of the processing performed in steps ST202 and ST203 until detection of a cell allowing connection reestablishment.

The disclosure of the specification, the drawings, and the abstract included in Japanese Patent Application No. 2010-262410, filed on November 25, 2010, is incorporated herein by reference in its entirety.

### Industrial Applicability

The communication terminal apparatus and the method of reestablishing connection to a cell according to the present invention are particularly suitable for performing connection reestablishment to a cell in a radio communication system.

### Reference Signs List

- 100: Communication terminal apparatus
- 101, 110: Antenna
- 102: Radio receiving section
- 103: Demodulation section
- 104: Connection reestablishment determining section
- 105: Neighboring cell information decoding section
- 106: Neighboring cell search section
- 107: Connection reestablishment request information generating section
- 108: Multiplexing/modulation section
- 109: Radio transmitting section

## Claims

1. A communication terminal apparatus that connects to any of a plurality of cells served by a base station, to perform communication, the apparatus comprising:
an acquiring section that acquires, from a cell to which the apparatus is currently connected, neighboring cell information indicating a neighboring cell located near the currently connected cell;
a detection section that performs a cell search when a need for connection reestablishment to a cell arises, and that detects, as a connection reestablishment target cell, a cell that matches a cell detected by the search from among cells indicated by the neighboring cell information; and
a connection reestablishment section that reestablishes connection to the connection reestablishment target cell detected by the detection section.

2. The communication terminal apparatus according to claim 1, wherein the neighboring cell information is information indicating another cell served by the base station serving the currently connected cell.

3. The communication terminal apparatus according to claim 1, wherein the neighboring cell information is information indicating a cell served by a base station located near the base station serving the currently connected cell.

4. The communication terminal apparatus according to claim 1, wherein the acquiring section acquires the neighboring cell information transmitted from the currently connected cell as broadcast information.

5. The communication terminal apparatus according to claim 1, wherein the acquiring section acquires the neighboring cell information transmitted from the currently connected cell as a connection setting message.

6. The communication terminal apparatus according to claim 1, wherein the acquiring section acquires the neighboring cell information transmitted from the currently connected cell as a connection reconfiguration message.

7. The communication terminal apparatus according to claim 1, wherein the neighboring cell information is cell ID information on the neighboring cell.

8. The communication terminal apparatus according to claim 1, wherein the neighboring cell information is frequency information used by the neighboring cell.

9. The communication terminal apparatus according to claim 1, wherein the neighboring cell information is radio connection system information used by the neighboring cell.

10. A base station that provides and serves a cell used to communicate with the communication terminal apparatus according to claim 1, the base station comprising:
a selection section that selects a communication terminal apparatus to which the neighboring cell information is to be transmitted, in accordance with a size of data to be transmitted to each communication terminal apparatus; and
a transmission section that transmits the neighboring cell information to the communication terminal apparatus selected by the selection section.

11. A base station that provides and serves a cell used to communicate with the communication terminal apparatus according to claim 1, the base station comprising:
a measurement section that measures an electric field strength of a signal received from a communication terminal apparatus;
a selection section that selects a communication terminal apparatus having an electric field strength not greater than a predetermined value, the electric field strength being measured by the measurement section; and
a transmission section that transmits the neighboring cell information to the communication terminal apparatus selected by the selection section.

12. A base station that provides and serves a cell used to communicate with the communication terminal apparatus according to claim 1, the base station comprising:
a measurement section that measures a moving speed of each communication terminal apparatus based on a signal received from the communication terminal apparatus;
a selection section that selects a communication terminal apparatus having a moving speed not less than a predetermined value, the moving speed being measured by the measurement section; and
a transmission section that transmits the neighboring cell information to the communication terminal apparatus selected by the selection section.

13. A method of reestablishing connection to a cell for a communication terminal apparatus that connects to any of a plurality of cells served by a base station, to perform communication, the method comprising:
acquiring, from a cell to which the apparatus is currently connected, neighboring cell information indicating a neighboring cell located near the currently connected cell;
performing a cell search when a need for connection reestablishment to a cell arises, and detecting, as a connection reestablishment target cell, a cell that matches a cell detected by the search from among cells indicated by the neighboring cell information; and
reestablishing connection to the detected connection reestablishment target cell.
